# EUROPÄISCHE PATENTANMELDUNG

(11) **EP 3 876 403 A1**
(43) Veröffentlichungstag der Anmeldung: **08.09.2021**
(21) Anmeldenummer: 20160522.7
(22) Anmeldetag: 02.03.2020
(51) Int. Cl.: H02K 15/02, B32B 7/12, H01F 41/02

(54) **VERFAHREN ZUM PAKETIEREN VON BLECHTEILEN ZU BLECHPAKETEN**

(71) Anmelder: voestalpine Stahl GmbH, 4020 Linz (AT)
(72) Erfinder: Fluch, Ronald, 4020 Linz (AT); Atzmüller, Peter, 4020 Linz (AT)
(74) Vertreter: Jell, Friedrich

(57) **Zusammenfassung**

Es wird ein Verfahren zum Paketieren von Blechteilen (4) aus einem Elektroband (3) oder -blech zu Blechpaketen (2) mit je einer Pakethöhe (hp) in einem Toleranzbereich (Δh) zu einer vorgegeben Sollpakethöhe (hs) gezeigt.

## Beschreibung

Die Erfindung betrifft ein Verfahren zum Paketieren von, auf mindestens einer ihrer Flachseiten eine Schmelzklebelackschicht, insbesondere Backlackschicht, aufweisenden Blechteilen aus einem Elektroband oder -blech zu Blechpaketen mit je einer Pakethöhe hp in einem Toleranzbereich Δh zu einer vorgegeben Sollpakethöhe hs.

Bei der Herstellung von mit einer Schmelzklebeschicht beschichteten Blechteilen aus einem Elektroband oder -blech zu Blechpaketen wird die Pakethöhe üblicherweise nach dem Verbacken, also einer Erwärmung des Blechpakets über eine Verbackungstemperatur des Schmelzklebelacks bei entsprechend ausreichender Verbackungszeit, erfasst. Anschließend werden in der Pakethöhe ungeeignete Blechpakete aussortiert. Alternativ kann die Höhe auch nach dem Aufeinanderstapeln und vor dem Erwärmen zum Verbacken ermittelt werden, in der Pakethöhe unzureichende Blechpakete vor dem Verbacken auszusortieren oder in der Höhe anzupassen, um den Ausschuss an Blechpaketen zu verringern. Aber auch dieses Verfahren hat den Nachteil, dass nicht mit Sicherheit die Pakethöhe vorausgesagt werden kann, die die Blechpakete nach einem Verbacken aufweisen werden. Der Grund hierfür liegt in den zahlreichen Einflussfaktoren. Einerseits kann die Höhe jedes einzelnen Blechteils, beispielsweise im Bereich von einigen µm, variieren, andererseits kann dies auch bei der Höhe der Schmelzklebelackschicht der Fall sein. Im ungünstigsten Fall können sich diese Faktoren aufsummieren, wodurch die Pakethöhe der verbackten Blechpakete erheblich variieren kann. Dies reduziert die Reproduzierbarkeit solcher Verfahren zur Herstellung von Blechpaketen mit einer Pakethöhe hp in einem Toleranzbereich Δh zu einer vorgegeben Sollpakethöhe hs.

Die US 2017/001258 A1 schlägt daher vor, beim Verbacken des Blechpakets die Verfahrensparameter zu regeln. Beispielsweise werden hierzu Parameter wie der zeitliche Temperaturverlauf, der axiale Druck auf das Blechpaket und die erfasste Pakethöhe des Blechpakets miteinbezogen, um auf die Pakethöhe einzuwirken. Nachteilig kann zur Verringerung der Pakethöhe der axiale Druck auf das Blechpaket nicht unbegrenzt erhöht werden, da ein Ausquetschen von erwärmtem Schmelzklebelack droht - was zum Verlust der Kurzschlusssicherheit des Blechpakets führen kann. Zudem wird in diesem Verfahren im Falle einer Pakethöhe unterhalb des Toleranzbereichs keine Anpassung ermöglicht - sohin prinzipiell nur dazu geeignet, die Pakethöhe zu verringern. Dieses Verfahren ist daher nicht universal einsetzbar und zudem auch nur für geringfügige Anpassungen in der Pakethöhe geeignet.

Die Erfindung hat sich daher die Aufgabe gestellt, ein Verfahren zur Herstellung von Blechpaketen der eingangs geschilderten Art derart zu verändern, dass damit exakte Blechpakete auf besonders flexible Weise und mit hoher Reproduzierbarkeit hergestellt werden können. Zudem soll das Verfahren eine kontinuierliche und energieeffiziente Paketierung von Blechpaketen gewährleisten.

Die Erfindung löst die gestellte Aufgabe durch die Merkmale des Anspruchs 1.

Werden die Schmelzklebelackschichten der aufeinandergestapelten Blechteile auf eine erste Temperatur, die über einer Glasübergangstemperatur T_{g} des Schmelzklebelacks und unterhalb der Verbackungstemperatur des Schmelzklebelacks liegt, vorerwärmt und in diesem vorerwärmten Zustand unter Druck gesetzt, kann sich beim erfindungsgemäßen Paketierverfahren die Möglichkeit einer flexiblen und genauen Anpassung der Pakethöhe ergeben. Mithilfe dieser Schichtverbindung unter Druck und Wärme können nämlich Unebenheiten zwischen den einzelnen Blechteilen verringern und damit das Blechpaket viel genauer in jenen Zustand übergeführt werden, der nach dem Verbacken der Schmelzklebelackschichten am Blechpaket besteht. Ein nachfolgendes Erfassen der Pakethöhe hp von den einzelnen Blechpaketen aus den aufeinandergestapelten Blechteilen mithilfe eines Messverfahrens kann daher besonders exakt vorgenommen werden.

Wird dann gegebenenfalls bei Unterschreitung des Toleranzbereichs von dieser erfassten Pakethöhe hpm zumindest ein zusätzliches Blechteil auf eine Stirnseite des betreffenden Blechpakets aufgebracht, damit die Pakethöhe hp an eine Höhe im Toleranzbereich Δh zur vorgegeben Sollpakethöhe hs anzupassen, können formgenaue Blechpakete zur Verfügung stehen. Dies ist deshalb noch möglich, da die Schmelzklebelackschicht nicht auf einer Temperatur über der Verbackungstemperatur erwärmt wurde, was ein Aufbringen eines oder weiterer Blechteile auf das jeweilige Blechpaket ohne Qualitätseinbußen erlaubt. Diese formgenauen Blechpakete können nachfolgend einem Verbacken zugeführt werden, um deren Pakethöhe zu fixieren bzw. damit deren Schmelzklebelackschichten auszuhärten.
Hierzu werden die Schmelzklebelackschichten jedes Blechpakets auf eine zweite Temperatur, die größer gleich der Verbackungstemperatur des Schmelzklebelacks ist, enderwärmt und damit dessen Blechteile über die Schmelzklebelackschichten miteinander verbackt.
Zudem kann diese Möglichkeit, Blechpakete nach der Paketierung auch zu erhöhen, dazu beitragen das Herstellungsverfahren zu erleichtern, indem beispielsweise tendenziell die Anzahl an paketierten Blechteilen in Richtung eines Untermaßes der Pakethöhe eingestellt wird. Derart ist ein Übermaß sicher vermeidbar, welches bekanntermaßen durch Druck auf das Blechpaket meistens nicht in ausreichendem Ausmaß reduziert werden kann - vor allem nicht, ohne dabei eine funktionsbeeinträchtigende/funktionsgefährdende Ausquetschung von Schmelzklebelack in Kauf nehmen zu müssen.
Das erfindungsgemäße Verfahren zeichnet sich daher durch eine hohe Reproduzierbarkeit in der Herstellung von in der Höhe exakten Blechpaketen aus Blechteilen aus. Zudem kann die Verwendung der Wärmenergie der Vorerwärmung bei der Enderwärmung auch die Energieeffizienz in der kontinuierlichen Herstellung von Blechpaketen verbessern.

Vorzugsweise wird das zumindest eine Blechteil auf die Schmelzklebelackschicht am Blechpaket aufgebracht. Dadurch wird das Blechteil also auf eine warme Schmelzklebelackschicht aufgebracht, was die Anbindung des zusätzlichen Blechteils verbessern kann.
Wird das, zumindest eine Blechteil erwärmt, bevor es auf das Blechpaket aufgebracht wird, ist ein Temperaturabfall vermeidbar. Auf diese Weise ist es möglich, die Anbindung des zusätzlichen Blechteils zu verbessern. Vorzugsweise wird das zusätzliche Blechteil auf die erste Temperatur erwärmt.
Vorzugsweise wird beim Anpassen der Pakethöhe das, mindestens eine Blechteil auf das stirnseitige Ende des Blechpakets unter Druck aufgebracht. Damit kann die Anbindung des Blechteils an das Blechpaket weiter verbessert werden.
Im Allgemeinen wird erwähnt, dass das aufgebrachte Blechteil gleich mit den aufeinandergestapelten Blechteilen sein kann, also auch auf mindestens einer seiner Flachseiten eine Schmelzklebelackschicht, insbesondere Backlackschicht, aufweisen kann.

Einfache Verfahrensbedingungen können sich ergeben, wenn die erste Temperatur im Bereich von 90 °C bis 150 °C, insbesondere 100 °C bis 120 °C, liegt und/oder dass die zweite Temperatur im Bereich von 180 °C bis 250 °C, insbesondere von 180 °C bis 220 °C, liegt.

Geringe Taktzeiten können garantiert werden, wenn im vorerwärmten Zustand der Schmelzklebelackschichten das Erfassen der Pakethöhe und/oder das Anpassen der Pakethöhe erfolgt.

Ein kontinuierlicher Ablauf des Verfahrens wird ermöglicht, wenn das Erwärmen der Schmelzklebelackschichten auf die erste Temperatur in einer Stapeleinrichtung erfolgt, die an ein Stanzwerkzeug anschließt, welches Stanzwerkzeug die Schmelzklebelackschichten in der Stapeleinrichtung unter Druck setzt.

Ein alternativer kontinuierlicher Ablauf ist vorstellbar, wenn das Erwärmen der Schmelzklebelackschichten auf die erste Temperatur in einem ersten Ofen erfolgt, in welchen Ofen die Blechpakete aus den aufeinandergestapelten Blechteilen eingebracht werden.

Auch kann sich mit dieser Ausgestaltung des Verfahrens im Fluss von einer Einrichtung zur nächsten Einrichtung in der Handhabung erleichtern - beispielsweise, indem die Anpassung der Pakethöhe in einer Paketregulierungseinrichtung erfolgt und/oder das Verbacken der Blechteile in einem zweiten Ofen erfolgt.

Die Reproduzierbarkeit des Verfahrens kann weiter verbessert werden, wenn alle Blechpakete unter den gleich hohen Druck gesetzt werden. Zudem ist damit eine Trendanalyse der Pakethöhen der Blechpakete reproduzierbar durchführbar. Vorzugsweise liegt der Druck im Bereich von 2 bis 10 N/mm², insbesondere von 3 bis 5 N/mm².

Vorzugsweise beträgt die Dicke jedes Blechteils zwischen 0,1 und 0,5 mm, insbesondere von 0,1 bis 0,3 mm, und/oder beträgt die Dicke der Schmelzklebelackschicht jedes Blechteils zwischen 2 und 12 µm, insbesondere von 4 bis 8 µm. Damit sind besonders vorteilhafte Voraussetzungen für eine hohe Reproduzierbarkeit des Verfahrens erreichbar.

Das Verfahren kann sich insbesondere für vergleichsweise hohe Blechpakete eignen, beispielsweise wenn jedes Blechpaket mehr als 100 Blechteile aufweist.

Wird im Falle eines Überschreitens der Sollpakethöhe durch die erfasste Pakethöhe des Blechpakets beim Aufeinanderstapeln der Blechteile für das jeweilige Blechpaket die Anzahl um mindestens ein Blechteil reduziert, kann dies einer Absicht, beim Paketieren der Blechpakete ein Untermaß der Pakethöhe zu bevorzugen förderlich sein - zumindest aber ist ein Übermaß im Verfahren vermeidbar. Die Reproduzierbarkeit des Verfahrens kann damit weiter erhöht werden

Unter anderem kann auch im Falle eines Unterschreitens der Sollpakethöhe durch die erfasste Pakethöhe des Blechpakets beim Aufeinanderstapeln der Blechteile für das jeweilige Blechpaket die Anzahl um mindestens ein Blechteil erhöht wird.

Vorzugsweise wird die Anzahl der zu einem Blechpaket aufeinandergestapelten Blechteile stets derart gewählt wird, dass die erfasste Pakethöhe die Sollpakethöhe des Blechpakets um mindestens die Dicke eines Blechteils der aufeinandergestapelten Blechteile unterschreitet.

Erfolgt die Anpassung der Pakethöhe durch Aufbringen von eins bis fünf Blechteilen, insbesondere von eins bis drei Blechteilen, auf das stirnseitige Ende des Blechpakets, kann dies für eine ausreichende Erhöhung der Pakethöhe beitragen. Auch kann durch solche eine in der Anzahl an Blechteilen vergleichsweise geringe Anpassung vermeiden, dass andere Ungenauigkeiten Einfluss auf Formgenauigkeit des Blechpaket nehmen können.

Hohe Passgenauigkeit am zusätzlich aufgebrachten Blechteil gegenüber den paketierten Blechteilen des Blechpakets kann gewährleistet werden, wenn vor dem Paketieren zum Blechpaket das, mindestens eine Blechteil vor dem Aufeinanderstapeln ausgeschieden wird und für die Anpassung der Pakethöhe verwendet wird

In den Figuren ist beispielsweise der Erfindungsgegenstand anhand mehrere Ausführungsbeispiele näher dargestellt. Es zeigen
- Fig. 1: eine schematische Darstellung zu einer ersten Vorrichtung zur Durchführung des erfindungsgemäßen Verfahrens,
- Fig. 2: eine schematische Darstellung zu einer zweiten Vorrichtung zur Durchführung des erfindungsgemäßen Verfahrens
- Fig. 3a: aufeinandergestapelte Blechteile nach einem Verfahren gemäß dem Stand der Technik,
- Fig. 3b: aufeinandergestapelte Blechteile im erfindungsgemäßen Verfahren,
- Fig. 4a: einen Höhenverlauf von nach einem Verfahren nach dem Stand der Technik paketierten Blechpaketen und
- Fig. 4b: einen Höhenverlauf von nach dem erfindungsgemäßen Verfahren paketierten Blechpaketen.

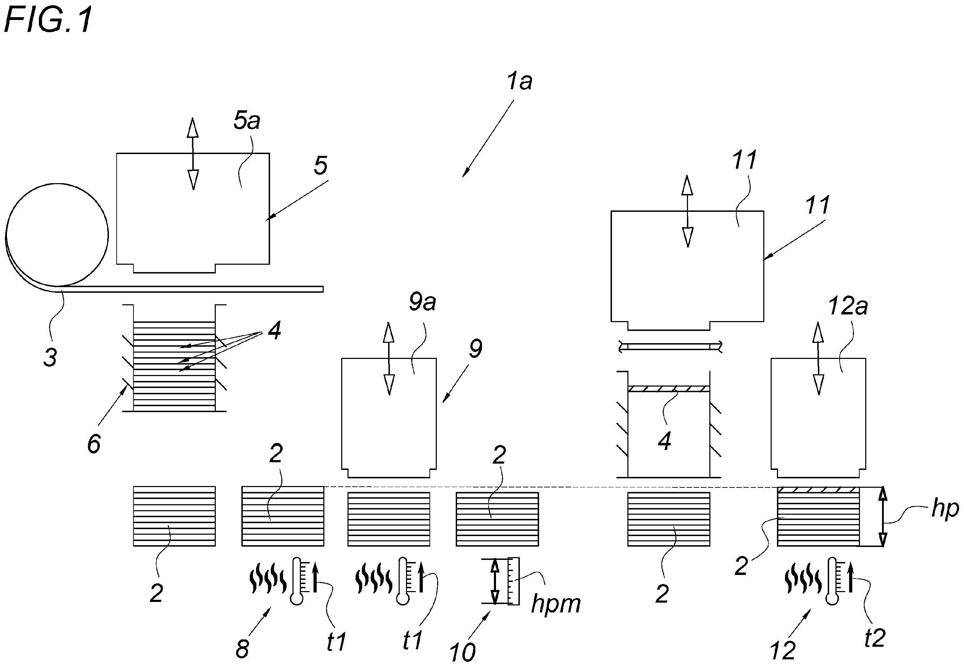

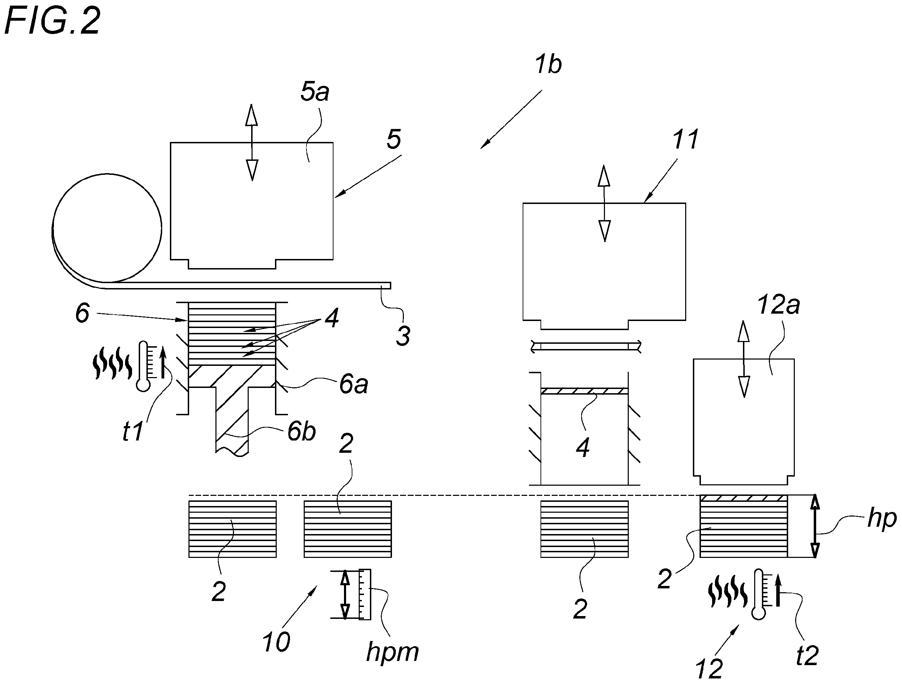

Nach den Figuren 1 und 2 sind Vorrichtungen 1a, 1b dargestellt, mit denen Blechpakete 2 hergestellt werden, deren Pakethöhe hp in einem Toleranzbereich zu einer vorgegebenen Sollpakethöhe hs liegt. Die Blechpakete 2 werden vorzugsweise für elektromagnetische Bauteile, beispielsweise für elektrischen Maschinen, verwendet.

Hierzu werden durch die Vorrichtung 1a - wie in Fig. 1 dargestellt - aus einem Elektroband 3 mehrere Blechteile 4 abgetrennt.
Das Elektroband 3 ist mit einer thermohärtbaren Schmelzklebelackschicht 7 mit vorzugsweise auf Epoxydharzbasis, beispielsweise Backlackschicht, beschichtet. Die thermohärtbare bzw. heißhärtende Schmelzklebelackschichten 7 können aus Backlack bestehen. Beispielsweise kann auch ein katalytisierter Backlack Anwendung finden, z.B.: Backlack mit Depotbeschichtung zur rascheren Ausreaktion.
Die Abtrennung der Blechteile 4 wird mit einem Stanzwerkzeug 5, das auch Teil eines nicht dargestellten Folgestanzwerkzeugs sein kann, durchgeführt. Andere Einrichtungen zur Abtrennung von Blechteilen 4, beispielsweise Laser, sind vorstellbar. Vorzugsweise beträgt die Dicke jedes Blechteils 4 zwischen 0,1 und 0,5 mm und die Dicke jeder Schmelzklebelackschicht 7 zwischen 2 und 12 µm.

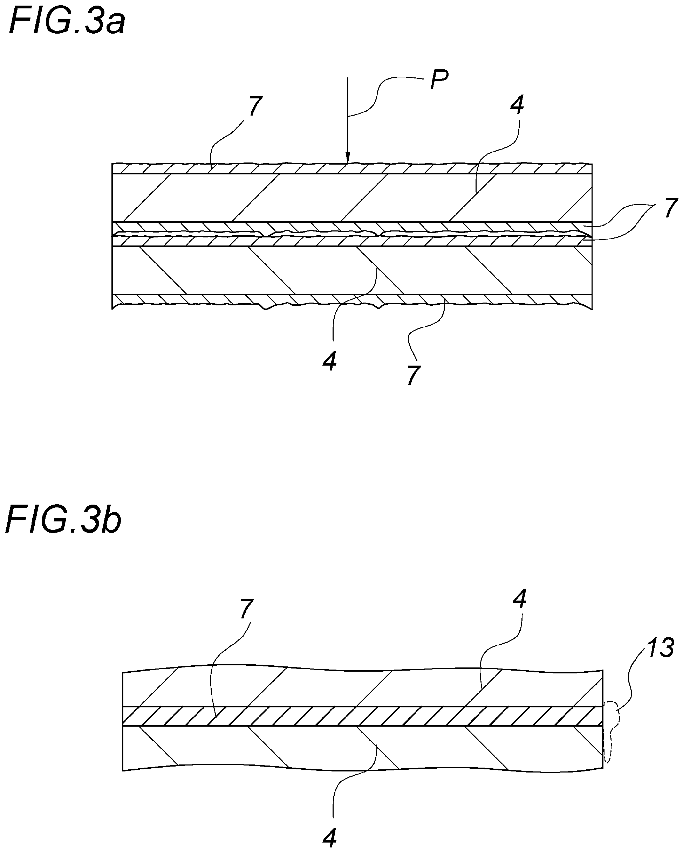

Die Blechteile 4 werden vom Stanzstempel 5a des Stanzwerkzeugs 5 in eine Stapeleinrichtung 6 gedrängt. In dieser Stapeleinrichtung 6 werden die Blechteile 4, die auf mindestens einer ihrer Flachseiten 4a eine Schmelzklebelackschicht 7, nämlich Backlackschicht, aufweisen, aufeinandergestapelt. Zwei von diesen gestapelten Blechteilen 4 sind in Fig. 3a zu erkennen. Alle aufeinandergestapelten Blechteile 4 verlassen die Stapeleinrichtung 6 in Blechpakete 2 bzw. werden beim Verlassen der Stapeleinrichtung 6 in Blechpakete 2 getrennt, was nicht näher dargestellt worden ist.

Die Blechpakete 2 werden dann weiteren Verfahrensschritten unterworfen - und zwar wird das Blechpaket 2 in einen ersten Ofen 8 eingebracht, um damit die Schmelzklebelackschichten 7 der aufeinandergestapelten Blechteile 4 auf eine erste Temperatur t1, welche über einer Glasübergangstemperatur T_{g} des Schmelzklebelacks 7 und unterhalb der Verbackungstemperatur des Schmelzklebelacks liegt, vorerwärmt. Vorzugsweise liegt die erste Temperatur t1 bei 90°C (90 Grad Celsius).

In einem nächsten Schritt wird das Blechpaket 2 in eine Presse 9 eingebracht, die auf das Blechpaket 2 mit einem Presstempel 9a eine auf das Blechpaket 2 axiale Presskraft P auf das Blechpaket 2 ausübt - siehe Presskraft P in Fig. 3a.
Durch diese Presskraft P werden Unebenheiten, beispielsweise in der Anbindung des Schmelzklebelacks 7 an ein Blechteil 4 oder auch an einen Schmelzklebelack 7 eines anschließenden Blechteils 4, ausgeglichen - siehe hierzu Fig. 3b.
Die Presse 9 setzt alle Blechpakete 2 unter den gleich hohen Druck, der im Bereich von 2 bis 10 N/mm2, vorzugsweise von 3 bis 5 N/mm2, nämlich 4 N/mm2 liegt. Diese Presskraft P kann beispielsweise ausreichen, zu einer vollständigen Anbindung der Schmelzklebelackschichten 7 zu führen, um damit die freien Bereiche zwischen den Schmelzklebelackschichten 7, wie in Fig. 3a zu erkennen, zu beheben. Auch kann damit die Anbindung der Blechteile 4 untereinander erheblich verbessert werden, was die Standfestigkeit der, durch das erfindungsgemäße Verfahren hergestellten Blechpakete 2 weiter erhöht.
Auch wird - wie in Fig. 1 zu erkennen - das Blechpaket 2 bzw. deren Schmelzklebelackschicht 7 während des Pressens auf erster Temperatur t1 gehalten.

Damit sind alle Voraussetzungen für exakte Messungen der Pakethöhe hp geschaffen. Hierzu wird das Blechpaket 2 in einem weiteren Schritt nach der Presse 9 einer Messeinrichtung 10 zugeführt, die die Pakethöhe hpm erfasst. Verschiedenste Messverfahren sind hierzu vorstellbar, beispielsweise optische Verfahren, manuelle Verfahren etc, oder auch Verfahren, bei dem über die Position des Presstempels 9a der Presse 9 beim oder nach dem Unterdrucksetzen des Blechpakets 4 auf dessen Pakethöhe hpm rückgeschlossen wird.

Vorzugsweise wird die Pakethöhe hpm vom Blechpaket 2 erfasst, deren Schmelzklebelackschichten sich im vorerwärmten Zustand befinden, was die Genauigkeit des Messverfahrens weiter erhöhen kann.

Anhand dieser erfassten Pakethöhe hpm wird dann gegebenenfalls eine Anpassung der Pakethöhe hp vorgenommen - und zwar, wenn diese erfasste Pakethöhe hpm einen Toleranzbereich Δh zu einer vorgegebenen Sollpakethöhe hs unterschreitet. In diesem Fall wird in einer, der Messeinrichtung 10 nachfolgenden Paketregulierungseinrichtung 11 auf das Blechpaket 2 ein zusätzliches Blechteil 4 auf eine Stirnseite 2a des betreffenden Blechpakets 2 aufgebracht, um die Pakethöhe hp an eine Höhe im Toleranzbereich Δh anzupassen. In den Beispielen entspricht der Toleranzbereich Δh insgesamt (also +/-) der Dicke d eines Blechteils 4, also +d/2 und -d/2 von der Sollpakethöhe hs ausgesehen.
Durch diese Maßnahme wird die Herstellung besonders exakter Blechpakete 2 sichergestellt.
Vorzugsweise wird die Pakethöhe (hp) des Blechpakets 2, deren Schmelzklebelackschichten 7 sich im vorerwärmten Zustand befinden, angepasst, was das Anbinden des Blechteils 4 an das Blechpaket 2 erleichtert.

In einem nachfolgenden Schritt wird das Blechpaket 2 in einen zweiten Ofen 12 eingebracht und dort die Schmelzklebelackschichten 7 des Blechpaketes 2 auf eine zweite Temperatur t2, die größer gleich der Verbackungstemperatur des Schmelzklebelacks ist, enderwärmt, um deren Blechteile 4 unter Druck, ausgeübt von einem einen Ofenstempel 12a, miteinander bei ausreichend langer Verbackungszeit verbacken. Beispielsweise liegt die zweite Temperatur t2 bei 190 °C (190 Grad Celsius) und die Verbackungszeit bei 15 Minuten.

Das erfindungsgemäße Verfahren ist daher äußerst flexibel und stellt mit hoher Reproduzierbarkeit exakte Blechpakete 2 her.
Besonders aber zeichnet sich das Verfahren dadurch aus, dass Blechpakete 2 mit einer Tendenz zu einem Untermaß aus Blechteilen 4 gestapelt werden können, weil ja die Möglichkeit besteht, solche untermaßige Blechpakete 2 mit einem zusätzlichen Blechteil 4 ergänzen zu können. Es kann sich daher erübrigen, übermaßige Blechpakete 2 beim Verbacken durch Druck auf Maß zu bringen, was ohnehin nur geringfügig möglich ist. Eine Ausquetschung 13 von Schmelzklebelack, wie in Fig. 3b dargestellt, kann so vermieden werden, was die Kurzschlusssicherheit zwischen den Blechteilen 4 bzw. des Blechpakets 2 gefährden könnte.

Die Vorrichtung 1b nach Fig. 2 unterscheidet sich von der Vorrichtung 1a der Fig. 1 im Wesentlichen dadurch, dass die Vorerwärmung und das Belasten der Schmelzklebelackschichten 7 mit Druck nicht am Blechpaket 2 durchgeführt wird, sondern dies in der Stapeleinrichtung 6 erfolgt.
Hierzu ist die Stapeleinrichtung 6 mit einer Wandheizung 6a versehen, welche die Schmelzklebelackschichten 7 auf die erste Temperatur t1 erwärmen. Der Stanzstempel 5a hingegen drückt die abgetrennten Blechteile 4 in die Stapeleinrichtung 6 gegen die Gegenkraft eines Gegenhalters 6b - was zu einer axialen Kraft auf die aufeinandergestapelten Blechteile 4 führt und damit die vorerwärmten Schmelzklebelackschichten 7 mit Druck belastet.
Dieses Verfahren zeichnet sich durch eine geringere Anzahl an Verfahrensschritten aus und führt damit zu verminderten Taktzeiten in der Paketierung von in der Pakethöhe hp exakten Blechpaketen 2.

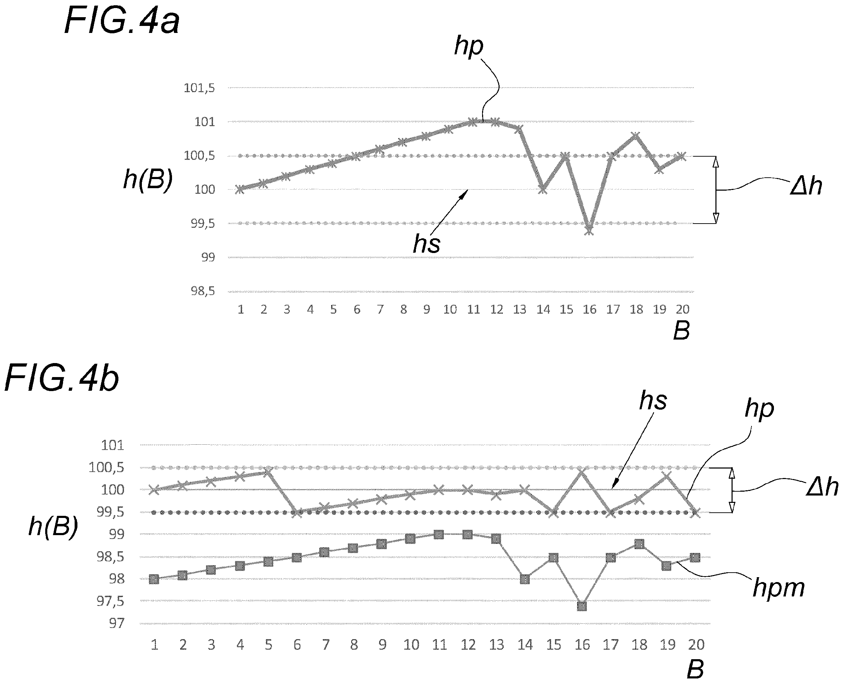

Fig. 4a offenbart ein Verfahren zum Paketieren von Blechpaketen nach dem Stand der Technik, bei dem eine Trendanalyse der Höhe H, über zwanzig Blechpakete dargestellt, durchgeführt wird. Wie zu erkennen, besteht bei den Blechpaketen mit der Nummer 7 bis 13 ein Übermaß, diese liegen sohin außerhalb der Obergrenze des Toleranzbereichs Δh zu einer Sollpakethöhe hs. Dieser Trend wird von der Trendanalyse erkannt, und die Anzahl an aufeinandergestapelten Blechteilen dermaßen hoch reduziert, dass die Pakethöhe hp wieder im geforderten Toleranzbereich Δh zu einer Sollpakethöhe hs liegt. Da sich die Pakethöhe im Trend im Gegensatz zu den vorherigen Blechpaketen verringert, besteht plötzlich beim Blechpaket mit der Nummer 16 ein Untermaß. Dies kann im Stand der Technik nicht korrigiert werden, und stellt einen Ausschuss dar. Das Gleiche gilt zumindest für die Blechpakete mit der Nummer 7 bis 13, deren Übermaß nicht mehr durch Druck kompensierbar ist, ohne Kurzschlüsse durch Ausquetschen von Schmelzklebelack befürchten zu müssen.

Fig. 4b offenbart das erfindungsgemäße Verfahren, bei dem die Option besteht, aus Blechteilen 4 gestapelte Blechpakete 2 bei Bedarf mit zumindest einem weiteren Blechteil 4 zu ergänzen. Daher kann auch das erfindungsgemäße Verfahren mit einer Tendenz, die Anzahl an aufeinandergestapelten Blechteile 4 auf Untermaß zum Toleranzbereich Δh einzustellen, durchgeführt werden. Bekannte Trendanalysen können so vernachlässigt werden, da -wie erwähnt- durch Aufbringen von Blechteilen die Pakethöhe hp stets an den Toleranzbereich Δh zu einer Sollpakethöhe hs angepasst werden kann.
Die Anzahl der aufgebrachten Blechteile 4 kann gering bleiben und vorzugsweise von eins bis fünf Blechteile 4 betragen, die Reproduzierbarkeit des Verfahrens zu gewährleisten. Beispielsweise werden nach Fig. 4b fehlen bei den Blechpaketen mit der Nummer 1, 2, 3, 4, 5, 15, 19 der zwei aufeinandergestapelte Blechteile 4, beim Blechpaket 16 drei aufeinandergestapelte Blechteile 4 und bei den anderen Blechpaketen je ein aufeinandergestapeltes Blechteil 4, wie dies an der erfassten Pakethöhe hpm zu erkennen ist.
Die jeweils fehlenden Blechteile 4 werden von der Stapeleinrichtung 6 aufgebracht, was eine hergestellte Pakethöhe hp innerhalb des Toleranzbereichs Δh zur Sollpakethöhe hs garantiert. Das erfindungsgemäße Verfahren kann daher ohne Ausschuss formgenaue Blechpakete 3 herstellen.

Dies nach dem Aufeinanderstapeln angeordnete Anpassung der Pakethöhe hs ist auch im Verfahren vergleichsweise problemlos integrierbar. Dies bereits aufgrund der Tatsache, dass die Taktzeit sowieso im Wesentlichen von der zeitlich längeren Aushärtungszeit beim Enderwärmen vorgegeben wird.

## Patentansprüche

1. Verfahren zum Paketieren von Blechteilen (4) aus einem Elektroband (3) oder -blech zu Blechpaketen (2) mit je einer Pakethöhe (hp) in einem Toleranzbereich (Δh) zu einer vorgegeben Sollpakethöhe (hs), bei dem
die Blechteile (4), welche auf mindestens einer ihrer Flachseiten (4a) eine Schmelzklebelackschicht (7), insbesondere Backlackschicht, aufweisen, aufeinandergestapelt werden,
die Schmelzklebelackschichten (7) der aufeinandergestapelten Blechteile (4) auf eine erste Temperatur (t1), die über einer Glasübergangstemperatur (T_{g}) des Schmelzklebelacks und unterhalb der Verbackungstemperatur des Schmelzklebelacks liegt, vorerwärmt und in diesem vorerwärmten Zustand unter Druck gesetzt werden, nachfolgend
von den einzelnen Blechpaketen (2) aus den aufeinandergestapelten Blechteilen (4) mithilfe eines Messverfahrens die Pakethöhe (hpm) erfasst und bei Unterschreitung des Toleranzbereichs (Δh) von dieser erfassten Pakethöhe (hpm) zumindest ein zusätzliches Blechteil (4) auf eine Stirnseite des betreffenden Blechpakets (2) aufgebracht wird, damit die Pakethöhe (hp) an eine Höhe im Toleranzbereich (Δh) zur vorgegeben Sollpakethöhe (hs) anzupassen, und nachfolgend
die Schmelzklebelackschichten (7) jedes Blechpakets (2) auf eine zweite Temperatur (t2), die größer gleich der Verbackungstemperatur des Schmelzklebelacks ist, enderwärmt und damit dessen Blechteile (4) über die Schmelzklebelackschichten (7) miteinander verbacken werden.

2. Verfahren nach Anspruch 1, **dadurch gekennzeichnet, dass** zumindest ein Blechteil (4) auf die Schmelzklebelackschicht am Blechpaket (2) aufgebracht wird und/oder erwärmt wird, bevor es auf das Blechpaket (2) aufgebracht wird, und/oder unter Druck aufgebracht wird.

3. Verfahren nach einem Anspruch 1 oder 2, **dadurch gekennzeichnet, dass** die erste Temperatur (t1) im Bereich von 90 bis 150 °C, insbesondere 100 bis 120 °C, liegt und/oder dass die zweite Temperatur (t2) im Bereich von 180 bis 250 °C, insbesondere von 180 bis 220 °C, liegt.

4. Verfahren nach einem Anspruch 1, 2 oder 3, **dadurch gekennzeichnet, dass** im vorerwärmten Zustand der Schmelzklebelackschichten (7) das Erfassen der Pakethöhe (hpm) und/oder das Anpassen der Pakethöhe (hp) erfolgt.

5. Verfahren nach einem der Ansprüche 1 bis 4, **dadurch gekennzeichnet, dass** das Erwärmen der Schmelzklebelackschichten (7) auf die erste Temperatur (t1) in einer Stapeleinrichtung erfolgt, die an ein Stanzwerkzeug anschließt, welches Stanzwerkzeug die Schmelzklebelackschichten (7) in der Stapeleinrichtung unter Druck setzt.

6. Verfahren nach einem der Ansprüche 1 bis 4, **dadurch gekennzeichnet, dass** das Erwärmen der Schmelzklebelackschichten (7) auf die erste Temperatur (t1) in einem ersten Ofen (8) erfolgt, in welchen Ofen (8) die Blechpakete (2) aus den aufeinandergestapelten Blechteilen (4) eingebracht werden.

7. Verfahren nach einem der Ansprüche 1 bis 6, **dadurch gekennzeichnet, dass** die Anpassung der Pakethöhe (hp) in einer Paketregulierungseinrichtung (11) erfolgt und/oder dass das Verbacken der Blechteile (4) in einem zweiten Ofen (12) erfolgt.

8. Verfahren nach einem der Ansprüche 1 bis 7, **dadurch gekennzeichnet, dass** alle Blechpakete (2) unter den gleich hohen Druck gesetzt werden und/oder dass der Druck im Bereich von 2 bis 10 N/mm², insbesondere von 3 bis 5 N/mm², liegt.

9. Verfahren nach einem der Ansprüche 1 bis 8, **dadurch gekennzeichnet, dass** die Dicke jedes Blechteils (4) zwischen 0,1 und 0,5 mm, insbesondere von 0,1 bis 0,3 mm, beträgt und/oder dass die Dicke der Schmelzklebelackschicht (7) jedes Blechteils (4) zwischen 2 und 12 µm, insbesondere von 4 bis 8 µm, beträgt.

10. Verfahren nach einem der Ansprüche 1 bis 9, **dadurch gekennzeichnet, dass** jedes Blechpaket (2) mehr als 100 Blechteile (4) aufweist.

11. Verfahren nach einem der Ansprüche 1 bis 10, **dadurch gekennzeichnet, dass** im Falle eines Überschreitens der Sollpakethöhe (hs) durch die erfasste Pakethöhe (hpm) des Blechpakets (2) beim Aufeinanderstapeln der Blechteile (4) für das jeweilige Blechpaket (2) die Anzahl um mindestens ein Blechteil (4) reduziert wird.

12. Verfahren nach einem der Ansprüche 1 bis 11, **dadurch gekennzeichnet, dass** im Falle eines Unterschreitens der Sollpakethöhe (hs) durch die erfasste Pakethöhe (hpm) des Blechpakets (2) beim Aufeinanderstapeln der Blechteile (4) für das jeweilige Blechpaket (2) die Anzahl um mindestens ein Blechteil (4) erhöht wird.

13. Verfahren nach einem der Ansprüche 1 bis 12, **dadurch gekennzeichnet, dass** die Anzahl der zu einem Blechpaket (2) aufeinandergestapelten Blechteile (4) stets derart gewählt wird, dass die erfasste Pakethöhe (hpm) die Sollpakethöhe (hs) des Blechpakets (2) um mindestens die Dicke eines Blechteils (4) der aufeinandergestapelten Blechteile (4) unterschreitet.

14. Verfahren nach einem der Ansprüche 1 bis 13, **dadurch gekennzeichnet, dass** die Anpassung der Pakethöhe (hp) durch Aufbringen von eins bis fünf Blechteilen (4), insbesondere von eins bis drei Blechteilen (4), auf das stirnseitige Ende des Blechpakets (2) erfolgt.

15. Verfahren nach einem der Ansprüche 1 bis 14, **dadurch gekennzeichnet, dass** vor dem Paketieren zum Blechpaket (2) das, mindestens eine Blechteil (4) vor dem Aufeinanderstapeln ausgeschieden und für die Anpassung der Pakethöhe (hp) verwendet wird.
